(19)

Europäisches
Patentamt
European
Patent Office
Office européen
des brevets

(11) **EP 1 787 949 A2**

(12) **EUROPEAN PATENT APPLICATION**

(43) Date of publication:
**23.05.2007 Bulletin 2007/21**

(51) Int Cl.:
*C01B 3/36* *(2006.01)*      *C01B 3/38* *(2006.01)*

(21) Application number: **06077023.7**

(22) Date of filing: **15.11.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **21.11.2005   US 285484**

(71) Applicant: **Delphi Technologies, Inc.
Troy, Michigan 48007 (US)**

(72) Inventors:
• **Thomas, Stephen M.
Laingsburg, MI 48848 (US)**

• **Simpkins, Haskell
Grand Blanc, MI 48439 (US)**
• **Nowlen, Dennis E.
Burton, MI 48509 (US)**
• **Ciosek, James M.
Davison, MI 48423 (US)**
• **Lecea, Oscar Alfonso
Grand Blanc, MI 48439 (US)**

(74) Representative: **Denton, Michael John et al
Delphi European Headquarters,
64 avenue de la Plaine de France,
Paris Nord II,
B.P. 65059, Tremblay en France
95972 Roissy Charles de Gaulle Cedex (FR)**

(54) **Fuel reformer and method of using the same**

(57)      Fuel reformers 100,200 and methods for using fuel reformers 100,200 are disclosed herein. In one embodiment, the fuel reformer 100,200 can comprise: an oxidant inlet, a mixing zone 38 capable of receiving the oxidant and vaporized fuel to form a fuel mixture 58, a reforming zone 40 disposed downstream of and in fluid communication with the mixing zone 38, wherein the reforming zone 40 is capable of converting the fuel mixture 58 into a gas stream 60, and a passive heat exchanger 24 disposed in thermal communication with the gas stream 60 and capable of heating the fuel prior to introduction to the mixing zone 38.

EP 1 787 949 A2

**Description**

TECHNICAL FIELD

The present invention relates to fuel reformer and methods for using the same.

BACKGROUND OF THE INVENTION

Fuel reformers, or fuel processors, are capable of converting a hydrocarbon fuel such as methane, propane, natural gas, gasoline, diesel, and the like, into various lower molecular weight reformates such as hydrogen (H), carbon monoxide (CO), carbon dioxide ($CO_2$), methane ($CH_4$), nitrogen ($N_2$), and water ($H_2O$). Reformers can be produced in various configurations, such as, steam reformers, dry reformers, or partial oxidation reformers.
Steam reformers react fuel and steam ($H_2O$) in heated cylinders filled catalytic media. Generally endothermic, heat is transferred into the cylinders, which promotes the conversion of hydrocarbons into primarily hydrogen and carbon monoxide. An example of the steam reforming reaction is as follows:

$$CH_4 + H_2O \rightarrow CO + 3H_2$$

Dry reformers produce hydrogen and carbon monoxide in the absence of water, employing oxidants, such as carbon dioxide, in the presence of catalysts. Similar to steam reformers, dry reformers are also endothermic and adsorb heat to in order to encourage conversion. An example of a dry reforming reaction is depicted in the following reaction:

$$CH_4 + CO_2 \rightarrow 2CO + 2H_2$$

Partial oxidation reformers burn a fuel/oxidant mixture in the presence of a catalyst to convert reactants into a reformate, such as, carbon monoxide and hydrogen. The process is exothermic and temperatures of about 600°C to about 1,600°C (degrees Celsius) can be experienced when converting the products into the desired effluent. An example of the partial oxidation reforming reaction is as follows:

$$CH_4 + \frac{1}{2}O_2 \rightarrow CO + 2H_2$$

Partial oxidation reformers can comprise a mixing zone and a reforming zone. In the mixing zone, air and fuel are mixed to form a fuel mixture and incinerated within a catalytic substrate, which comprises the reforming zone, producing the desired reformate.
Fuel is typically supplied into the mixing zone through a fuel injector. The fuel injector converts liquid fuel into a spray, or mist, of small droplets or particles that can be readily mixed with the air within the mixing zone. Unfortunately however, fuel injectors have difficulty providing small enough particles to provide efficient mixing. This is especially difficult in low-pressure fuel applications where fuel particles of 20 to 30 micrometers in diameter are common. In these applications it is typically that the mixing zone of the device is lengthened to allow longer residence times of the fuel mixture to promote additional vaporization and mixing of fuel particles prior to combustion.
High-pressure fuel injectors can be utilized in some fuel reformer applications. However, these applications have demonstrated to be energy intensive, costly, and still do not achieve a submicron particle size which provides for most efficient mixing.
Producing a uniform mixture is desirable for the reason that nonhomogeneous mixtures burn less efficient than homogeneous mixtures. As a result, localized "hot-spots" can form on the reformer's substrate, which can decrease the working life of the component. In addition, as the uniformity of the mixture decreases, the quality of the reformate decreases as well.
Consequently, there is a need for further innovation of fuel reformer designs to address these issues. Simple, efficient solutions and compact designs are desired.

SUMMARY OF THE INVENTION

Disclosed herein are reformers and methods for using reformers. In one embodiment, the fuel reformer can comprise: an oxidant inlet, a mixing zone capable of receiving the oxidant and vaporized fuel to form a fuel mixture, a reforming zone disposed downstream of and in fluid communication with the mixing zone, wherein the reforming zone is capable of converting the fuel mixture into a gas stream, and a passive heat exchanger disposed in thermal communication with the gas stream and capable of heating the fuel prior to introduction to the mixing zone.

In another embodiment, the fuel reformer can comprise: an oxidant inlet, a mixing zone capable of receiving the oxidant and vaporized fuel to form a fuel mixture, a reforming zone disposed downstream of and in fluid communication with the mixing zone, a fuel supply for supplying fuel, a sensor capable of determining a temperature selected from the group consisting of a fuel temperature and a fuel mixture temperature, an active heat exchanger capable of forming the vaporized fuel, and a system controller in operable communication with the sensor and the active heat exchanger and capable of controlling the active heat exchanger based upon data from the sensor.

In one embodiment, the method for reforming fuel can comprise:

heating a fuel in a passive heat exchanger, vaporizing the heated fuel in an active heat exchanger, introducing the vaporized fuel into a mixing zone, mixing the vaporized fuel with an oxidant, and reacting the fuel and the oxidant.

The above described are exemplified by the following figures and detailed description.

BRIEF DESCRIPTION OF THE DRAWINGS

Refer now to the figure, which is an exemplary embodiment.

Figure 1 is a cross-sectional illustration of an exemplary fuel reformer, generally designated 100.
Figure 2 is an exposed view of an exemplary fuel system, generally designated 48.
Figure 3 is a partial and cross-sectional illustration of an exemplary modified fuel reformer, generally designated 200.

DESCRIPTION OF THE PREFERRED EMBODIMENTS

Fuel reformers, or fuel processors, are utilized in many applications where "reformate" can be employed for useful purposes. One such application is on diesel vehicles where an "on-line" diesel fuel reformer can be utilized to produce reformate capable of regenerating NOx abatement devices.

In NOx abatement applications, as well as many others, the efficiency of reformate production influences overall system efficiency. It is advantageous to minimize the system demands for the production of reformate. Disclosed herein is an embodiment for a fuel reformer that utilizes vaporized fuel in lieu of liquid fuel supplied by fuel injectors that allows for more enhanced fuel mixing, enhanced uniformity in fuel mixture, greater operating efficiency, enhanced fuel mixture control, and a decreased overall reformer size.

Throughout this disclosure the term "reformate" will be used to indicate effluent produced by the reformer. In diesel NOx abatement applications, reformate can primarily comprise carbon monoxide, nitrogen, and hydrogen for regenerating system devices. However, this disclosure is not intended to be limited to this application or reformate compositions. It is acknowledged, although not discussed, that other useful reformates may be produced by various reformer, fuel, and catalyst configurations for beneficial purposes.

In addition, specific quantities and ranges will be discussed herein with respect to compositions. All ranges disclosed herein are inclusive and combinable (e.g., ranges of "up to about 25 wt%, or, more specifically, about 5 wt% to about 20 wt %", is inclusive of the endpoints and all intermediate values of the ranges of "about 5 wt% to about 25 wt%," etc). Furthermore, the terms "first," "second," and the like, as well as "primary", "secondary", and the like, do not denote any order or importance, but rather are used to distinguish one element from another, and the terms "a" and "an" do not denote a limitation of quantity, but rather denote the presence of at least one of the referenced items. The suffix "(s)" as used herein is intended to include both the singular and the plural of the term that it modifies, thereby including one or more of that term (e.g., the metal(s) includes one or more metals).

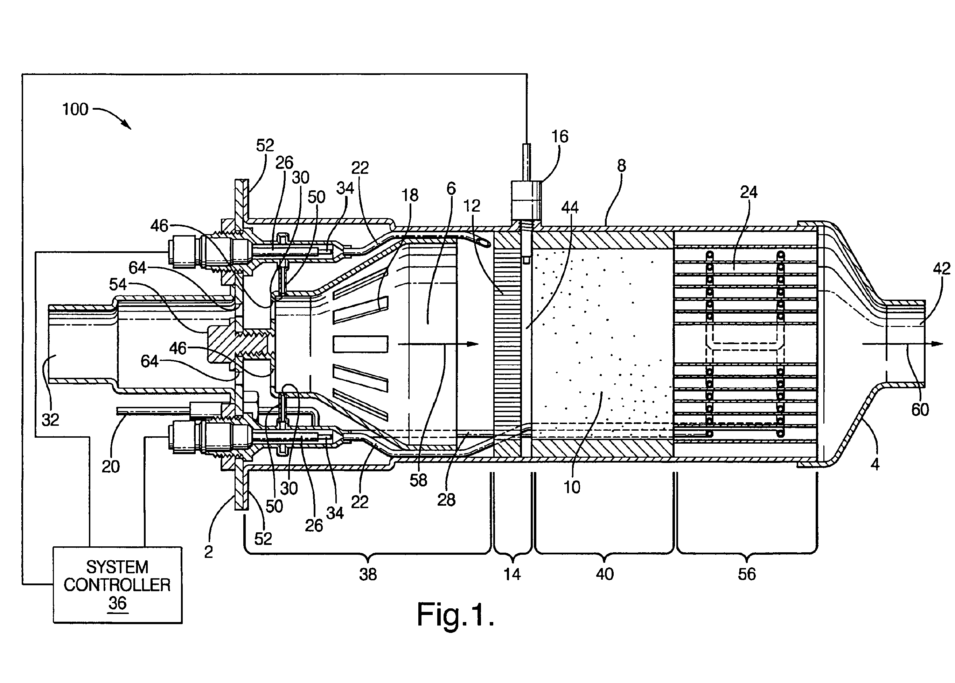

Referring now to Figure 1, a partial and cross-sectional view of an exemplary fuel reformer generally designated 100, is illustrated (hereinafter referred to as "reformer"). In the illustration, four components can be assembled to form the basic housing of reformer 100: mounting plate 2, end-cone 4, mixing cone 6, and shell 8 (hereinafter referred to as the "housing components"). In this exemplary embodiment it is envisioned that mixing cone 6 can be connected (e.g., bolted, welded, and so forth) to mounting plate 2, for example with bolt 54. Shell 8 can be slip-fit over or in mixing cone 6, and end cone 4 can be slip-fit over or in shell 8 and connected thereto (e.g., welded). Shell 8 can comprise flange 52, which can be connected (e.g., bolted, welded, and so forth) to mounting plate 2. Also connected to mounting plate 2 can be air supply port 32, which is connected in fluid communication with mixing cone 6 through air inlet orifices 64 that extend through the mounting plate 2 and mixture inlet orifices 46 that extend through the end of the mixing cone 6. It is envisioned that the air inlet orifices and the mixture inlet orifices 46 can be generally disposed in an annular array about the axis of the reformer 100 on their respective components, and comprise a plurality of orifices. However, any orientation, configuration, or number of orifices can be employed.

Supported within shell 8 can be a substrate 10, a flame arrester 12, and a heat exchanger 24. Heat exchanger 24 can be disposed in contact with end-cone 4, and substrate 10 can be disposed next to heat exchanger 24. Disposed between substrate 10 and flame arrester 12 can be a combustion chamber 44, in which ignition source 16 can be disposed. Combustion chamber 44 can comprise an open space, porous media, other flame management device(s), as well as combinations comprising at least one of the foregoing. Ignition source 16, which can be capable of igniting a fuel/oxidant mixture within fuel reformer 100, is connected in operable communication (e.g., electrical communication) with system controller 36.

When assembled, these components can be described as forming "zones". More specifically, the zones can include: a mixing zone 38, which comprises the internal volume of shell 8 and mixing cone 6 up to about flame arrester 12; a combustion zone 14, which comprises the internal volume of the flame arrester 12 and combustion chamber 44; a reforming zone 40, which comprises the volume of substrate 10; and, a heat exchanging zone 56, which comprises the internal volume of heat exchanger 24 to end-cone 4. Therefore, outlet 42 is in fluid communication with heat exchanging zone 56, which is in fluid communication with reforming zone 40, which is in fluid communication with combustion zone 14, which is in fluid communication with mixing zone 38.

Generally, the housing components, heat exchanger 24, substrate 10, and flame arrester 12, are illustrated in a generally cylindrical geometry with a circular cross-section. However, they can be configured in any geometry (e.g., elliptical cylinder, and the like). Any material(s) can be employed for the construction of shell 8, mixing cone 6, end-cone 4, and mounting plate 2. The material(s) employed can be chosen so as to be capable of withstanding the service conditions of the device, such as temperature (e.g., cycling between about -40° Celsius (°C) to about operating temperature), housing an oxidative reaction, external environmental conditions (e.g., sand, road salt, water, etc.), and so forth. Applicable material(s) can be, but are not limited to, ferrous metals, nickel, alloys comprising at least one of the foregoing, as well as mixtures comprising at least one of the foregoing, such as ferritic stainless steels (e.g., martensitic, ferritic, austenitic stainless materials), nickel alloys, and the like. Furthermore, it is envisioned that substrate 10, heat exchanger 24, and flame arrester 12, can be fixed within shell 8 using any method applicable. Furthermore, it is envisioned that the housing components, as well as the ignition source 16, are connected by any method applicable.

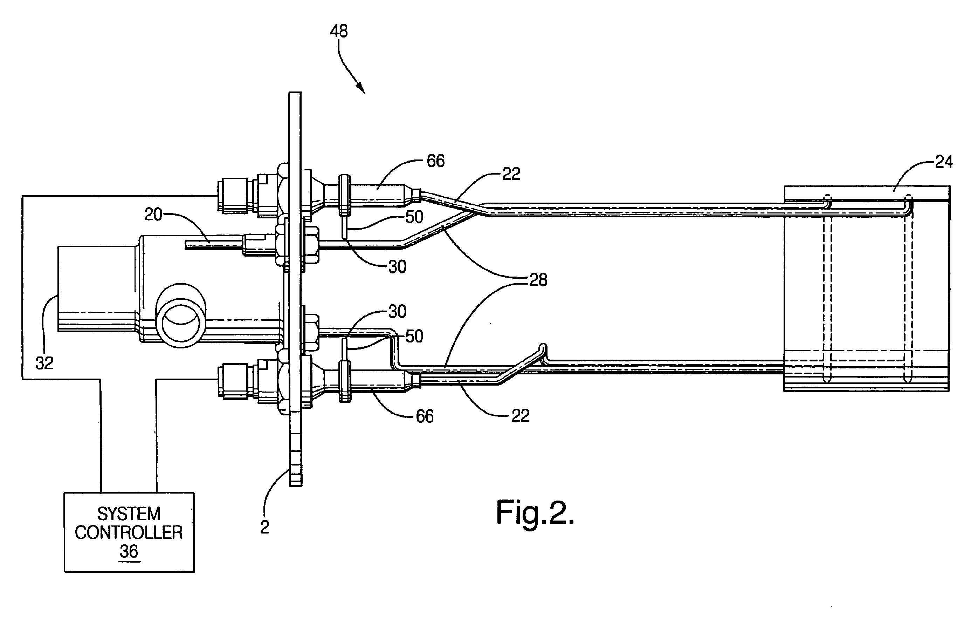

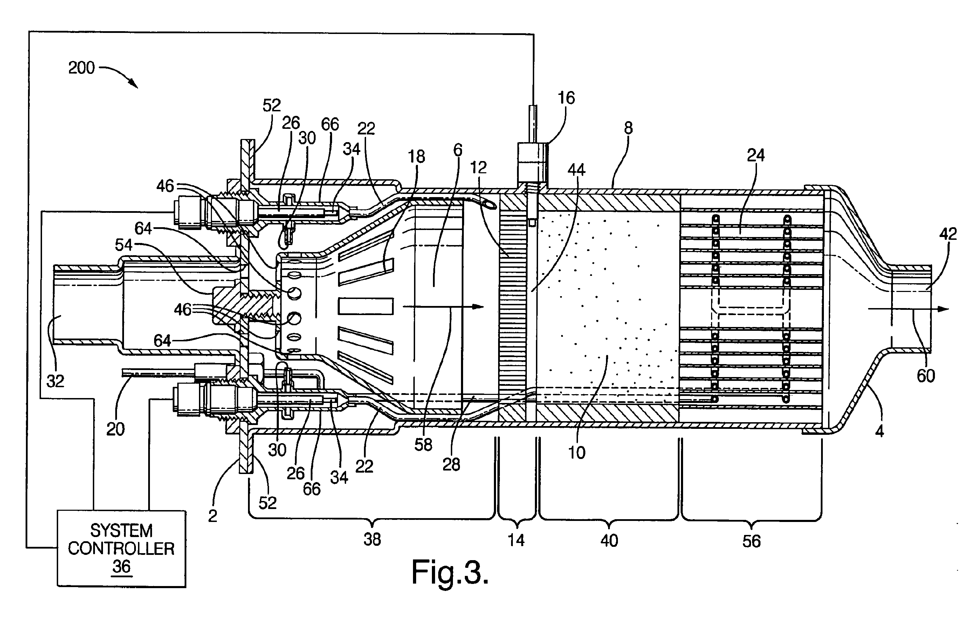

Referring now to Figure 2, an exposed view of the exemplary fuel system of reformer 100 is illustrated and generally designated 48. In the illustration, fuel connectors 20 can be connected to mounting plate 2, which can supply a fuel to the fuel system 48. Fuel can flow through fuel connectors 20 into secondary fuel lines 28 and flow further to the heat exchanger 24. Heat exchanger 24, which is a passive heat exchanger, is capable of heating fuel flowing therein when the system is operational. The fuel thereafter flows into the primary fuel lines 22 in a liquid and/or vapor state. Primary fuel lines 22 can transport the heated fuel from the heat exchanger 24 to heating elements 26 in active heat exchanger 66 (see also Figure 1). Active heat exchanger 66 (e.g., closed loop heat exchanger, electric heat exchanger, heater, and so forth), which can be connected in operable (e.g., electrical) communication to system controller 36, is also capable of heating the fuel flowing therein. More specifically, the active heat exchanger 66 can control (e.g., optimize) fuel temperature for subsequent down stream processing. As is illustrated in Figure 3, the active heat exchanger 66 can comprise heating elements 26 and can comprise a sensor 34 that can measure the temperature of the heated and/or evaporated fuel in the heat exchanger 66. The heated and/or evaporated fuel within active heat exchanger 66 can flow out of the active heat exchanger 66, into injector tubes 50, through fuel orifices 30, and into mixing cone 6.

Referring now to Figure 3, a partial and cross-sectional view of an exemplary modified fuel reformer, generally designated 200, is illustrated. In the illustration it can be seen that the modified fuel reformer 200 comprises many of the characteristics of the fuel reformer 100, therefore for conciseness, only the alternative configuration of the components within the mixing zone 38 will be described. Within the mixing zone 38, it can be seen that the active heat exchanger 66 are not connected in fluid communication with the mixing cone 6 via injector tubes 50. Rather, in this embodiment, the heated fuel from the heat exchanger 66 is injected through fuel orifices 30 into the internal volume of shell 8. The fuel, which can be in vaporized, atomized, and/or in droplet form, can therein mix with an oxidant supplied to the internal volume of shell 8 through air inlet orifices 64. The air inlet orifices 64 can be configured in any orientation, as discussed above with regard to fuel reformer 100.

The mixing of the oxidant and the fuel form a fuel mixture 58, which can thereafter flow through mixture inlet orifices 46 and/or through turbulence generators 18 into the optional mixing cone 6. The mixing cone 6 can be configured to comprise additional mixture inlet orifices 46 and/or additional turbulence generator(s), all of which can comprise any shape(s), and orientation(s). The mixing cone 6 can optionally be reconfigured to comprise a porous mixing-element (e.g., a screen, porous substrate, and so forth) that transverses the diameter of shell 8.

Fuel connectors 20, secondary fuel lines 28, heat exchanger 24, primary fuel lines 22, active heat exchanger 66, injector tubes 50, and mixing cone 6 can be assembled, fixed, connected, and/or mounted to one another by various methods. Furthermore, the components of fuel system 48 can be constructed of any material(s) capable of withstanding the service conditions of the device, such as; prolonged exposure to fuels, maintaining operating fluid pressures, temperature cycling between about -40°C to about operating temperature, external environmental conditions and a reducing environment (e.g., sand, road salt, water, etc.). Applicable materials include those described for use as the housing components.

As noted, it is apparent that the components of reformer 100 can be assembled in any configuration and utilizing any method applicable. These methods can comprise, but are not limited to, retention materials (e.g., intumescent matting, non-intumescent matting, meshes, fillers, and the like), housing features (e.g., flanges, sockets, extensions, and so forth), fasteners (e.g., screws, clamps, bolts, rivets, dowels, pins, press-fits, snaps, and so forth), metal working methods (e.g., swaging, stamping, welding, crimping, peening, and so forth), adhesives (e.g., ceramics, epoxies, and the like), by the use of retainers (e.g., retainer rings, snap-rings, o-rings, compression rings, springs, retainer pins, marmon clamps, and so forth), and the like, as well as combinations comprising at least one of the forgoing.

Reformer can operate using various reactants to produce various reformate compositions. Diesel fuel can be used in many applications, as it is readily available in vehicles employing reformer assisted NOx abatement systems. However, other hydrocarbon based fuels can be converted as well, such as, gasoline, ethanol, methanol, kerosene, diesel blends, natural gas, propane, butane, and so forth; and alternative fuels, such as biofuels, dimethyl ether, and so forth; as well as combinations comprising at least one of the foregoing fuels.

In an embodiment of the reformer, a low pressure metering fuel pump can be employed to provide the appropriate volume of fuel to reformer 100, with the system controller 36 optionally can be connected in operable communication with the fuel pump to control its operation. It is noted that other system components can be employed such as flow valve(s), sensor(s) (e.g., pressure sensor(s), temperature sensor(s), gas sensor(s) (such as oxygen, hydrocarbon, NOx, and so forth), and so forth, adjust, monitor, and/or control the system, oxidant, fuel, and/or reformate. For example, sensor(s) can be employed and positioned in any location and in any configuration to provide readings of process variables (e.g., fuel temperature, fuel vapor temperature, heating element temperature, fuel mixture 58 temperature, reformate temperature, substrate temperature, environmental temperatures, and the like, as well as combinations comprising at least one of the foregoing).

Oxidant supplied to the reformer 100 can comprise oxygen (e.g., pure oxygen, air, recirculated exhaust gas (such as exhaust gas from a turbine, an engine, a fuel cell, and so forth), and the like). The oxidant can optionally be heated prior to mixing with the fuel. Any method can be employed to achieve this function, such as, but not limited to, employing an electrical heating element, heat exchanger(s), and the like. In addition, pump(s), compressor(s), turbine(s), fan(s), and/or the like, can be utilized to pressurize the oxidant, if desired.

To promote mixing of the oxidant and the condensed fuel vapor, turbulence generators 18 can be employed within the mixing zone 38 of the reformer 100. The turbulence generators can be of any size, shape, or geometry, and configured in any orientation or multiplicity that can produce the desired airflow, such as, but not limited to, laminar flow, turbulent flow, flow eddy's, a vortex, a diffuser, as well as combinations comprising at least one of the foregoing. For example, turbulence may be employed to increase air / fuel mixing or provide a relatively balanced flow front of the fuel mixture 58 on flame arrester 12.

Flame arrester 12 can be incorporated in the design of the reformer 100. More specifically, in the embodiment illustrated in Figure 1, a flame arrestor 12 combined with combustion chamber 44 (e.g., porous media, open space, flame management system(s), and so forth), form combustion zone 14. Combustion zone 14 is disposed between the mixing zone 38 and the reforming zone 40 to prevent high temperatures from the reforming zone 40 from heating the fuel mixture 58 within the mixing zone 38 and causing premature gas phase reactions. Zone 14 allows combustion and ignition, and allows flow distribution (balances velocity across the face), while inhibiting flame propogation into mixing chamber. Flame arrestors 12 can comprise ferrous materials (e.g., stainless steel, and the like), metallic alloys (e.g., copper, nickel, aluminum, and the like), metallic oxides (e.g., aluminum oxide), as well as combinations comprising at least one of the foregoing materials. Flame arrester 12 can also be of any shape, with a geometry resembling the geometry of substrate 10 desirable.

The active heat exchanger 66 can be an electrical resistive heater(s) comprising designs such as, but not limited to, cartridge, strip, bayonet, coil, infrared, tubular, immersion designs, and so forth, capable of vaporizing the fuel. Moreover, in the exemplary embodiment illustrated in Figure 1, active heat exchanger 66 is depicted inside shell 8 and supported by mounting plate 2. It is intended to be apparent that one or more active heat exchanger 66 can be utilized, which can be located or oriented in any configuration enabling the heating the fuel, such as, but not limited to, direct fluid communication with the fuel, conduction methods not in fluid communication with the fuel, convection methods, radiation methods, and the like. It is also envisioned that insulating materials may be employed in conjunction with active heat exchanger 66 to provide insulation of various components (e.g., sensor 34, heat exchanger 24, fuel connectors 20, system controller 36, and the like), as well as the entire reformer.

The active heat exchanger 66 is in fluid communication with the heat exchanger 24, which can comprise any shape and type of exchanger capable of heating fuel flowing therein, and in particular, a passive heat exchanger. Desirably, this heat exchanger utilizes heat from the exothermic reaction within the reformer, heat generated from the exhaust, and/or heat from the internal combustion system. The size, shape, and location of heat exchanger 24 can be configured to the specific system in which it is employed.

System controller 36 and sensor 34 can be incorporated into reformer 100, for example, to improve system efficiency. The system controller 36 can utilize information from various system components (e.g., sensors) to control the reformer and the operation thereof; e.g., to provide temperature-feedback and control. This could include a controller employing a predetermined cycle during which energy supplied to heating element 26 is reduced based on time, or through the use of feedback gathered from operating conditions, such as, but not limited to, temperature, time, flow-rate, and the like, as well as combinations comprising at least one of the foregoing. Furthermore, without being bound by theory, an "on/off" controller, proportional controller, and/or a proportional-integral-derivative controller with "fuzzy-logic" capabilities, can be employed.

Substrate 10 supports the catalyst that facilitates the reaction of the fuel mixture 58 to produce the gas stream 60. This substrate can form zone 40, and/or zones 40 and 56 (i.e., zones 40 and 56 can be combined into a single zone). Although many configurations of substrates 10 can be employed (e.g., packing material, spheres, fibers, foils, monoliths, sponges, particulate, sieves, and the like), configurations comprising a multitude of channels axially disposed within the substrate 10 at approximately 400 or more channels per square inch are efficient. Furthermore, substrate 10 can comprise, materials such as, but is not limited to, metals (e.g., aluminum, stainless steel, and so forth), cordierite, silicon carbide, mullite, titanium oxides, titanium phosphates, aluminum oxides (alpha-aluminum oxides), aluminates (lanthanum aluminate, lanthanum hexaaluminate, zirconia toughened aluminate (ZTA)), alumino silicates, aluminum phosphates, aluminum titanates, zirconium oxides, zirconium phosphates, lanthanum zirconate, magnesium silicates, stabilized versions of the preceding, and combinations comprising at least one of the foregoing. In addition, substrate 10 can also comprise catalyst(s) capable of facilitating the desired reaction. These catalyst(s) can include materials such as alkali metal(s), alkali earth metal(s), lanthanide series metal(s), and/or transitional metals, such as but not limited to, platinum, iridium, cerium, ruthenium, rhodium, and/or oxides, salts, or alloys as well as combinations comprising at least one of the foregoing.

Optionally, one or more porous media combustion zones can be incorporated into flame arrester 12, substrate 10, or as an individual component disposed within reformer 100 as desired (e.g., as a thin layer on the combustion zone 14 side of flame arrester 12 for example). The porous media combustion zone can comprise any porous media (e.g., spheres, fibers, sponges, particulate, sieves, packing material, pre-forms, substrates, and the like) that is capable of diffusing the combustion reaction to ensure even distribution of the combustion reaction. Furthermore, the elements employed as a porous media combustion zone can comprise catalysts such as the metals listed above (e.g., alkali, alkali earth, lanthanide series, and transitional metals) to provide additional benefit.

Generally, there can be two modes of operation for reformer 100, however additional operating modes can be incorporated. The first mode is start-up, and the second mode is reforming operation. In one embodiment, during start-up, a predetermined amount of oxidant (e.g., air) is supplied to mixing cone 6 through air inlet orifice 64. Simultaneously, a predetermined amount of fuel is supplied through fuel connectors 20, which advances within the secondary fuel lines 28, through heat exchanger 24, into the primary fuel lines 22 and into active heat exchanger 66. As the fuel flows through active heat exchanger 66, it is heated above its vaporization temperature and vaporizes. The vaporized fuel then flows through injector tubes 50, through fuel orifice 30, and into mixing cone 6 where it can form a condensate (e.g., an ultra-fine condensate; such as particles having a major axis of less than 10 micrometers) and mix with the oxidant to form a fuel mixture 58. Disposed within mixing cone 6 can be turbulence generators 18 that can encourage turbulent flow and/or promote a desired flow of fuel mixture 58. At a predetermined time, as directed by system controller 36, ignition source 16 provides a source of ignition, which can initiate the combustion of the fuel mixture 58. The ratio of air to fuel during start-up can be referred to as a "combustion mixture", which can be about 1:1 to about 15:1 (i.e., about 15 parts air to about 1 part fuel).

After the initial combustion of the fuel mixture 58, additional oxidant is introduced (e.g., metered) into mixing zone 38 and mixed with additional vaporized fuel to sustain the combustion reaction. At this point the components of reformer 100 in fluid communication with mixing zone 38 and disposed downstream of flame arrestor 12 (e.g., substrate 10, heat exchanger 24, mixing cone 6, shell 8, and the like) begin to increase in temperature due to the combustion reaction. As these components increase in temperature, fuel flowing from the secondary fuel lines 28 can be heated within heat exchanger 24 prior to entering the primary fuel lines 22. When the heated fuel flows through active heat exchanger 66 it is vaporized and advances through the injector tubes and fuel orifices into the mixing zone 38.

As the temperature of the heat exchanger 24 increases, the heat transferred into the fuel by heat exchanger 24 increases as well. As a result, the temperature of the fuel entering the active heat exchanger 66 increases, therefore, active heat exchanger 66 then uses less energy to vaporize the fuel. This can be controlled by employing a system controller 36, which can be capable of communicating with a sensor 34 to determine the temperature of the fuel supplied to active heat exchanger 66 by heat exchanger 24. Using this measurement, system controller 36 can determine the appropriate amount of energy to supply to active heat exchanger 66 to ensure vaporization of the fuel, without supplying an unnecessary surplus of energy.

As the combustion reaction progresses, substrate 10 continues to increase in temperature up to a point at which it can support a reforming reaction. System controller 36 can determine this point through monitoring process variables (e.g., temperature, effluent composition, and the like), switching based on a preset inputs (e.g., time), and/or other process inputs to and/or instructions from system controller 36. When the temperature that will support reforming is reached, the system controller 36 can adjust the fuel mixture 58 from the "combustion mixture" to a richer "reforming mixture" that allows for efficient production of reformate. At this point, the process is considered to be operating under reforming operating conditions ("reforming mode"). It should be noted that prior to reaching a temperature and providing a fuel mixture conducive for the production of reformate, the emissions from the reformer can comprise non-catalytically reacted combustion products. Therefore, it is to be apparent that in Figures 1 and 3, gas stream 60 can comprise any products produced by the reformer.

During reforming mode, reformer 100 can operate with minimal additional heat energy from heating element 26 to produce vaporized fuel. When reformer 100 reaches operating temperature, which is dependent on system design, any heat supplied by heating element 26 is reduced from that supplied during start-up, while continuing to perform the fuel vaporization function. Since during the reforming operation the quantity of fuel and/or air supplied to reformer 100 can be varied to meet changing demands of the system in which it serves, the amount of energy employed to vaporize the fuel can also change accordingly. The system controller 36 can control the amount of energy employed to maintain fuel vaporization as the quantity of fuel and/or other variable(s) change.

The following examples are provided merely to further illustrate the disclosed reformer and method, and not to limit the broad scope thereof.

Example 1: In the following calculations, which are exemplary and theoretical, the heat energy to vaporize diesel fuel at a known flow rate and the heat energy produced by the reformer 100 operating at a "combustion mixture" and at a "reforming mixture" are calculated. These reactions are then compared to establish that reformer 100 is capable of producing enough heat energy to vaporize diesel fuel.

First, the amount of heat energy required to vaporize diesel fuel at a known flow rate is calculated. Using the approximation that approximately 1,000 watts of heat energy is required per gram per second (g/s) to raise the temperature of diesel fuel from about 22°C to about 450°C, the heat energy is calculated to be approximately 958 watts. This is illustrated in the following equations:

$$Q_{fuel} = \dot{m}\left[C_{pL}\Delta T_L + 278{,}000 + C_{pv}\Delta T_v\right] \qquad (I)$$

$$Q_{fuel} = 1e-3\left[1{,}800*200 + 278{,}000 + 1{,}600*200\right] = 958\,watts \qquad (II)$$

where:

$Q_{fuel}$ = Heat Energy of Diesel Fuel
$m$ = Mass flow of Diesel Fuel
$C_{pL}$ = Specific Heat Capacity of liquid Diesel Fuel
$\Delta T_L$ = Temperature change of liquid in °C
$C_{pv}$ = Specific heat of vapor
$\Delta T_v$ = Temperature change of vapor in °C

Next, the heat energy generated by reformer 100 can be calculated while operating under a "reformate mixture" with a fuel mixture 58 of 5:1 (i.e., 5 g/s air to 1 g/s diesel fuel). Utilizing the following calculations, this is determined to be approximately 6,250 watts:

Reaction:

$$1.027\,C_{12}H_{26} + 5H_2O \rightarrow 2.03\,CO + 0.159\,H_{12} + 3.818\,N_2 \qquad (III)$$

Molar Balance:

$$C_{12}H_{26} + 6H_2O \rightarrow 12CO + 13H_2 + 23N_2 \qquad (IV)$$

Molecular weights on a mole basis (note: grams per second (g/s) times mole per gram (mole/g) equals moles per second (mole/s)):

$$C_{12}H_{26} = 12*12 + 26 = 170 \text{ g/mole} \qquad (V)$$

$$CO = 12 + 16 = 28 \text{ g/mole} \qquad (VI)$$

Conservation of energy for a control volume

$$E_{in} + E_g - E_{out} = E_{st} \qquad (VII)$$

$$E_{in} = \sum m_{dot_i} C_{p_i} T_i \qquad (VIII)$$

$$E_g = \sum \Delta H_p - \sum \Delta H_R = \Delta H_{EX} \qquad (IX)$$

$$E_{out} = \sum m_{dot_o} C_{p_o} T_o \qquad (X)$$

Body Flux Load for the catalyst

$$E_{st} = \frac{E_{in} + E_g - E_{out}}{BrickVolume(mm^3)} = \frac{m_{dota} C_{Pa} T_i - \left(m_{dotco} C_{pco} + m_{dotH2} C_{pH2} + m_{dotN2} C_{pN2}\right) T_o + H_{EX}}{BrickVolume(mm^3)} \qquad (XI)$$

$$\sum \Delta H_p = \frac{2.03}{28} \Delta H_f(CO) + \frac{0.159}{2} \Delta H_f(H_2) + \frac{3.818}{28} \Delta H_f(N_2) = \frac{2.03}{28}(-110541) = -8{,}014.22 watts \qquad (XII)$$

$$\sum \Delta H_R = \frac{1.027}{170} \Delta H_f(C_{12}H_{26}) + \frac{5}{28.926} \Delta H_f(Air) = \frac{1.027}{170}(-292162) = -1{,}765.0 watts \qquad (XIII)$$

$$\therefore \Delta H_{EX}\left(\frac{5g}{s}\right) massairflow = -6{,}250 watts \qquad (XIV)$$

The calculations shown above illustrate that a reformer 100 operating at a reformate mixture of approximately 5:1 can produce ample heat energy to vaporize diesel fuel.

Example 2: The following example illustrates an exemplary operating method of reformer 100 as researched. In this method, the reformer operation incorporates a start-up mode, a reforming mode, and a soak mode. First, the reformer 100 is ignited similar to the methods discussed above. The reformer 100 maintains combustion of a "combustion mixture" for a total of ten seconds. At the lapse of start-up mode, system controller 36 can initiate a reforming mode at 2.5 g/s mass air flow for 200 seconds. The duration allows for the production of reformate (e.g., as desired by the application). Next, system controller 36 can initiate a soak cycle for 45 seconds (e.g., if desired by the application). During the soak cycle the fuel and/or oxidant supply is shut off in order to temporarily discontinue reformate production. Many systems that employ reformers require reformate intermittently, therefore, the soak cycle is used so as to only supply reformate when needed by the system to maximize fuel efficiency. (Furthermore, the reformer 100 can be designed to retain enough heat to provide an acceptable start-up time.) After the soak cycle, the system controller 36 can initiate another reforming cycle wherein the mass flow of fuel mixture 58 is adjusted richer than the previous cycle to about 5 g/s mass air flow for 10 seconds (e.g., to that used by the system in reforming mode). After this second reforming cycle, another 45 second soak cycle can be initiated. During operation of the system, the reformer can be alternated between the reforming cycle and the soak cycle, to control reformate production to an amount that will be used by the system to which the reformer is connected; e.g., to meet reformate demand.

Example 3: Operation of the reformer can comprise several steps (with additional step(s), including possible steps occurring before, after, or between the following steps also possible). Repeating steps of 3 thru 6 can be used for more cycling.

Step 1 - Combustor on for 10 seconds.
Step 2 - Reform at 2.5 g/s mass air flow for 200 seconds.
Step 3 - Soak for 45 seconds.
Step 4 - Reform at 5 g/s mass air flow for 10 seconds.
Step 5 - Soak for 45 seconds.
Step 6 - Reform at 5 g/s mass air flow for 10 seconds.

As disclosed herein, the reformer can utilize active heat exchanger(s) (e.g., heat exchanger 66) that introduces heat into the fuel from another source, and passive heat exchanger(s) (e.g., heat exchanger 24) that introduces heat to the fuel from the reformer (e.g., exotherms in the reformer), to vaporize fuel prior to introducing the fuel into the mixing zone 38. In the mixing zone 38, the vaporized fuel can condensate in ultra-fine particles and mix with the oxidant prior to combustion and conversion into reformate.

The benefits of producing an ultra fine condensate (e.g., less than or equal to about 10 micrometers) are numerous. Firstly, an ultra-fine condensate mixes with the oxidant more readily than larger droplets, such as those supplied by a fuel injector (e.g., generally 20 micrometers to 30 micrometers). This produces a more uniform fuel mixture 58, which burns more efficiently and can be controlled more precisely than a mixture produced from a fuel injector. This results in greater overall system control. Second, the reformer can utilize small, energy efficient metering pumps to supply fuel to the system, which are more energy efficient than reformers employing high-pressure pumps generally employed to compliment high-pressure fuel injectors. Thirdly, in high or low-pressure fuel injector based reformers, lengthy mixing zones are incorporated to allow fuel droplets additional "residence time" to vaporize and to mix with the air. This results in a longer overall device length. The reformers disclosed herein do not require lengthy mixing zones as the ultra fine condensate mixes readily with the air. Therefore, the disclosed devices can be smaller in overall length than fuel-injected systems. Finally, as a result of the increased uniformity of the fuel mixture 58, a more consistent mixture can be reacted on and/or within substrate 10, which results in a decreased number of "hot spots" on the substrate 10 surface and improves overall substrate 10 life.

While the invention has been described with reference to exemplary embodiments, it will be understood by those skilled in the art that various changes may be made and equivalents may be substituted for element thereof without departing from the scope of the invention. In addition, many modifications may be made to adapt a particular situation or element to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

**Claims**

1. A fuel reformer 100,200, comprising:

   an oxidant inlet;
   a mixing zone 38 capable of receiving the oxidant and vaporized fuel to form a fuel mixture 58;
   a reforming zone 40 disposed downstream of and in fluid communication with the mixing zone 38, wherein the reforming zone 40 is capable of converting the fuel mixture 58 into a gas stream 60; and
   a passive heat exchanger 24 disposed in thermal communication with at least one of the gas stream 60 and the reforming zone 40, and capable of heating the fuel prior to introduction to the mixing zone 38.

2. The fuel reformer 100,200 of Claim 1, wherein the heat exchanger 24 is capable of vaporizing the heated fuel.

3. The fuel reformer 100,200 of Claim 1, wherein the heat exchanger 24 is capable of utilizing an exotherm in the reformer 100,200 to heat the fuel.

**4.** The fuel reformer 100,200 of Claim 1, further comprising an active heat exchanger 66 capable of receiving the fuel from the passive heat exchanger 24 and forming the vaporized fuel.

**5.** The fuel reformer 100,200 of Claim 4, further comprising

a sensor 34 capable of measuring a fuel temperature; and
a system controller 36 connected in operable communication with the sensor 34, wherein system controller 36 is capable of controlling the operation of the active heat exchanger 66 based on communications with the sensor 34.

**6.** The fuel reformer 100,200 of Claim 5, wherein the sensor 34 is disposed in thermal communication with the fuel mixture 58.

**7.** The fuel reformer 100,200 of Claim 5, wherein the system controller 36 is capable of controlling the fuel mixture 58.

**8.** The fuel reformer 100,200 of Claim 1, wherein the reforming zone 40 comprises a metal substrate 10 and a catalyst capable of facilitating the reaction of fuel and oxidant to reformate.

**9.** The fuel reformer 100,200 of Claim 1, wherein the passive heat exchanger 24 is disposed in the reforming zone 40.

**10.** A fuel reformer 100,200, comprising:

an oxidant inlet;
a mixing zone 38 capable of receiving the oxidant and vaporized fuel to form a fuel mixture 58;
a reforming zone 40 disposed downstream of and in fluid communication with the mixing zone 38, wherein the reforming zone 40 is capable of converting the fuel mixture 58 into a gas stream 60;
a fuel supply for supplying fuel;
a sensor 34 capable of determining a temperature selected from the group consisting of a fuel temperature and a fuel mixture temperature;
an active heat exchanger 66 capable of forming the vaporized fuel; and
a system controller 36 in operable communication with the sensor 34 and the active heat exchanger 66 and capable of controlling the active heat exchanger 66 based upon data from the sensor 34.

**11.** The fuel reformer 100,200 of Claim 10, wherein the reforming zone 40 comprises a metal substrate 10 and a catalyst capable of facilitating the reaction of fuel and oxidant to reformate.

**12.** The fuel reformer 100,200 of Claim 10, further comprising a passive heat exchanger 24 disposed in the reforming zone 40 and capable of heating the fuel prior to the fuel entering the active heat exchanger.

**13.** A method for reforming fuel, comprising:

heating a fuel in a passive heat exchanger 24;
vaporizing the heated fuel in an active heat exchanger 66;
introducing the vaporized fuel into a mixing zone 38;
mixing the vaporized fuel with an oxidant; and
reacting the fuel and the oxidant.

**14.** The method of Claim 13, wherein the vaporized fuel condenses prior to the reacting.

**15.** The method of Claim 14, wherein the condensed fuel has particles having a size of less than or equal to about 10 micrometers.

**16.** The method of Claim 13, wherein vaporizing the heated fuel further comprises

determining an amount of additional heat to be supplied to the heated fuel to vaporize the heated fuel; and
supplying the additional heat to the heated fuel to vaporize the fuel.

**17.** The method of Claim 16, further comprising measuring a temperature of the heated fuel and determining the amount of the additional heat based upon the temperature.

18. The method of Claim 16, further comprising measuring a temperature of the fuel mixture and determining the amount of the additional heat based upon the temperature.

19. The method of Claim 13, further comprising

sensing a parameter selected from the group consisting of fuel temperature, fuel mixture temperature, flow rate; and
controlling the active heat exchanger based upon the parameter.

Fig.1.

Fig.2.

Fig.3.